# EUROPEAN PATENT SPECIFICATION

(11) **EP 0 551 098 B1**
(45) Date of publication and mention of the grant of the patent: **02.04.1997**
(21) Application number: 93100093.9
(22) Date of filing: 05.01.1993
(51) Int. Cl.: G05B 19/05

(54) **Displaying method in programming system for programmable controller**
Anzeigeverfahren in einem Programmiersystem für eine programmierbare Steuerung
Méthode d'affichage d'un système de programmation pour une commande programmable

(30) Priority: 06.01.1992 JP 33/92
(43) Date of publication of application: 14.07.1993
(73) Proprietor: HITACHI, LTD., Chiyoda-ku, Tokyo 100 (JP)
(72) Inventor: Sano, Masahiro, Hitachi-shi (JP); Ito, Atsushi, Inba-gun, Chiba-ken (JP); Maeda, Akihisa, Funabashi-shi (JP)
(74) Representative: Strehl Schübel-Hopf Groening & Partner

(56) References cited:
- EP-A- 0 495 992
- WO-A-91/06899
- PATENT ABSTRACTS OF JAPAN vol. 10, no. 86 (P-443)4 April 1986 & JP-A-60 221 807 (TOSHIBA KIKAI KK.) 6 November 1985

## Description

### BACKGROUND OF THE INVENTION

### FIELD OF THE INVENTION

The present invention relates to a displaying method for a programming system and a programmable controller, and more particularly to a displaying method for a programing system and a programmable controller which can generate a sequence program while generating or editing a ladder diagram on a display screen.

### DESCRIPTION OF THE RELATED ART

In a programmable controller which processes a program representing a multiplicity of ladder circuits including relay contacts successively connected, it is necessary to generate a sequence program and to store the generated program into a program memory of a programmable controller body. Conventionally, a dedicated programming system is used for generating a program representing the ladder circuits. This programming system is provided with a display device such as a cathode-ray tube (hereinafter referred to as CRT), and an operator completes a sequence program to be stored into the program memory of the programmable controller while successively and interactively generating and editing a ladder diagram of intended ladder circuits on a display screen by use of this programming system.

Though a sequence program represents a multiplicity of ladder circuits, there may be the case where many similar ladder circuits exist in the multiplicity of ladder circuits. The conventional method for reducing the number of process steps for generation of the program in such a case includes copying a certain basic or original ladder circuit by a required number, storing the copied circuits directly and additionally into a program memory, and thereafter performing a necessary edition processing including the change of input/output numbers of relay contacts, coils, etc. for the copied circuits, thereby completing new ladder circuits.

In order to perform the above processing in a more simple manner and with a high efficiency, a method has been proposed which includes storing a basic ladder circuit into a temporary storage memory which is independent of a program memory, performing a necessary processing such as the change of an input/output number in a state in which the basic ladder circuit is stored in the temporary storage memory, and thereafter storing the changed ladder circuit additionally into the program memory. Upon edition/generation of a program, which ladder circuits of a multiplicity of ladder circuits in the program memory are stored as the basic ladder circuits in the temporary storage circuit, is displayed by displaying the circuit numbers of those ladder circuits on a portion of the display screen of a CRT or displaying them in the form of a list on another display screen.

As a prior art showing the above kind of technique, one can refer to JP-A-60-221807 or JP-A-56-11502.

In the above-mentioned prior art, that ladder circuit of a multiplicity of ladder circuits stored in a program memory, which is stored in a temporary memory, is managed by only a circuit number provided for that circuit. Therefore, for example, in case that it is desired to search for a ladder circuit which is a substance, it is necessary to change over a display screen to fetch the ladder circuit by use of another function. Accordingly, there is the problem that the operation becomes complicated.

### SUMMARY OF THE INVENTION

An object of the present invention is to provide a displaying method for a programmable system and a programmable controller in which a program input efficiency can be improved and which makes it possible to easily confirm a ladder circuit stored in a temporary storage memory by reference to the contents of a program memory, thereby eliminating a complicated operation.

This object is met by a display method according to claim 1. Preferred embodiments are disclosed in the depending claims.

The present invention provides a displaying method for a programming system and a programmable controller, the programming system generating/editing a sequence program to be written into a program memory of the programmable controller, the programming system being provided with display means for displaying the sequence program on its display screen in a form thereof transformed to a ladder diagram including relay contacts so that the sequence program to be stored into the program memory is interactively generated/ edited on the display screen, in which in response to the reference designation of any ladder circuit providing a sequence program having already been generated, the reference designated ladder circuit is displayed on the display screen in a representation distinguished from other ladder circuits.

According to a preferred embodiment of the present invention, the reference designated ladder circuit is displayed in an emphasized representation. Alternatively, the reference designated ladder circuit may be displayed in a brightness-inverted representation or in a color-changed representation. In displaying the reference designated circuit, either the whole or a part of the circuit can be displayed in the distinguished representation. In case that the part of the circuit is displayed in the distinguished representation, a circuit number of the reference designated ladder circuit is displayed in a representation distinguished from the circuit numbers of the other ladder circuits.

With the above construction, wherein a ladder circuit(s), in that portion of reference designated ladder circuits which is stored in a temporary storage memory, can be confirmed at a glance with no need of a special operation during generation or edition of a ladder diagram, the confirmation is facilitated, thereby making it possible to prevent an erroneous input. Also, since a complicated operation is not required, the efficiency of programming can be improved.

### BRIEF DESCRIPTION OF THE DRAWINGS

Fig. 1 is a diagram showing the state of display on a display screen according to an embodiment of the present invention;
Fig. 2 is a diagram showing the state of display on the display screen in the case where an "AUTOMATIC GENERATION" function is selected;
Fig. 3 is a conceptual diagram showing a relationship between a program memory and a temporary storage memory;
Fig. 4 is a block diagram showing an automatic program generation function;
Fig. 5 is a block diagram showing the hardware construction of a programming system;
Fig. 6 is a diagram showing the state of display on the display screen according to another embodiment of the present invention;
Fig. 7 is a diagram showing the state of display on the display screen according to a further embodiment of the present invention; and
Fig. 8 is a flow chart of an automatic program generation processing included in the present invention.

### DESCRIPTION OF THE PREFERRED EMBODIMENTS

Embodiments of the present invention will now be explained in reference to the accompanying drawings.

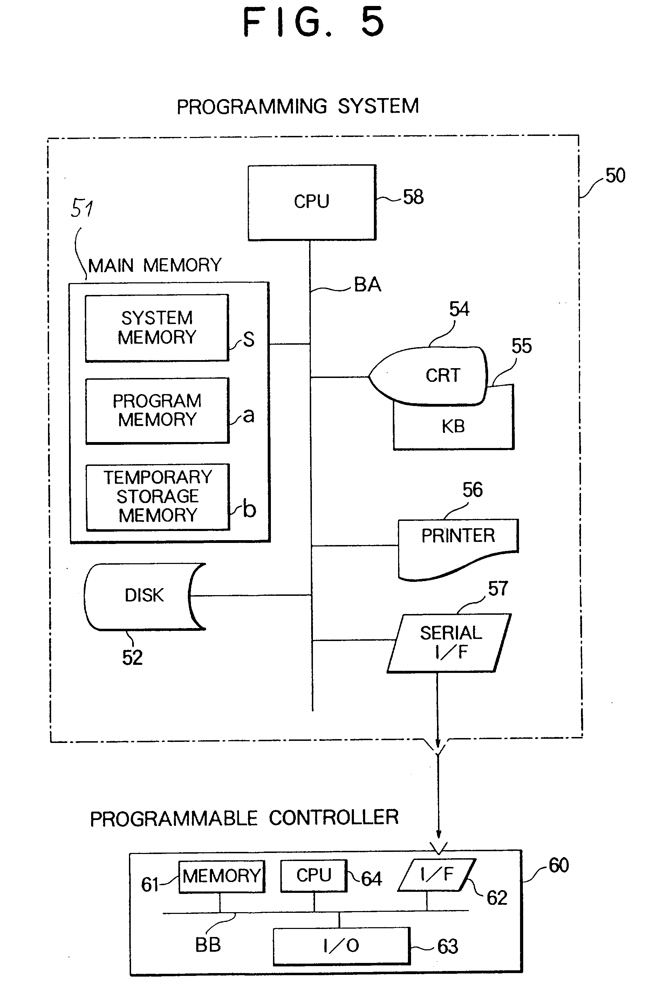

Fig. 5 shows an example of the hardware construction of a programming system of a present invention and a programmable controller body into which a sequence program generated by the programming system is to be loaded. A portion enclosed by one-dotted chain line in Fig. 5 denotes a programming system 50.

The programming system 50 includes a main memory 51 as an internal storage memory for storing a system program for programming, data and so on, a hard disk (DISK) 52 as an external memory, a CRT 54 as a display device, a keyboard (KB) 55 as an input device, a printer 56 as a printing device, a serial interface 57 for communication for transmitting a generated sequence program to a programmable controller 60, and a central processing unit (CPU) 58 for making a control for the whole of the programming system 50. These components are interconnected by a bus BA so that the central processing unit 58 can control the the individual components in accordance with a program for system control stored in a system memory s.

The programmable controller 60 includes an interface 62 for receiving a sequence program transmitted from the programming system 50, a memory 61 for storing the received sequence program, a CPU 64 for executing the stored sequence program, and an input/output device (I/O) 63 for delivering/receiving data to/from an object to be controlled. These components are inter-connected by a bus BB so that the central processing unit 64 can control the individual components in accordance with the sequence program stored in the memory 61.

The CPU 58 of the programming system 50 makes a control for a display on the CRT 54 in accordance with a system control program stored in the system memory s and a key input from the keyboard 55 by an operator to generate a sequence program including a multiplicity of ladder circuits. The generated sequence program is stored into the hard disk 52. After a series of sequence programs have been completed, the CPU 58 transfers the series of sequence programs to the programmable controller 60 through the serial interface 57 in accordance with a key operation by the operator.

In the main memory 51 are allotted the system memory s for storing the system control program for enabling a programming by the operator in correspondence to a display screen of the CRT 54, a program memory a for storing the generated sequence program, and a temporary storage memory b constructed such that a plurality of arbitrary ladder circuits can be stored.

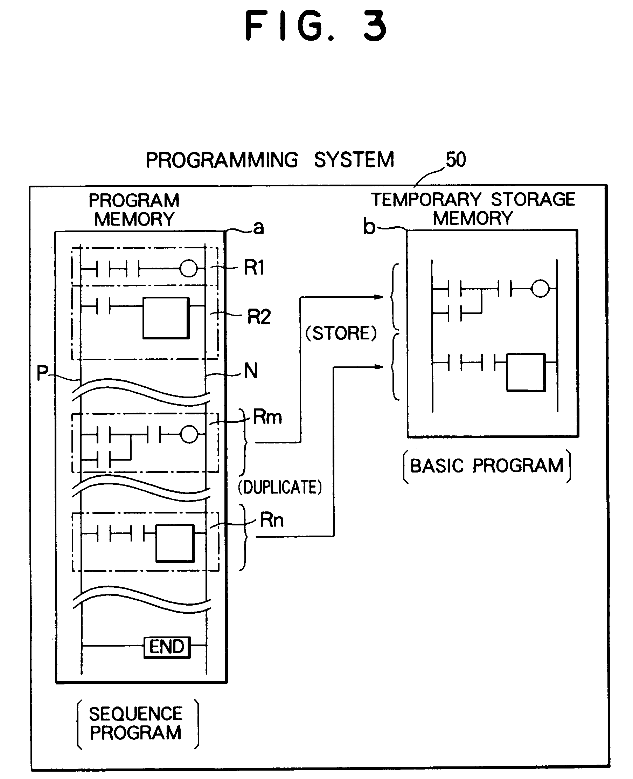

Fig. 3 is a schematic diagram illustrating a relationship between the program memory a and the temporary storage memory b shown in Fig. 5. In Fig. 3, reference symbol a denotes a program memory for storing a sequence program including a multiplicity of ladder circuits R1, R2, ---, Rn, and symbol b denotes a temporary storage memory constructed such that a plurality of ladder circuits Rm and Rn providing the bases or originals of copy can be stored. Even if the contents of the temporary storage memory b are changed, any influence is not given on the contents of the program memory a at all. In other words, the temporary memory b is a working memory which is completely independent of the program memory a.

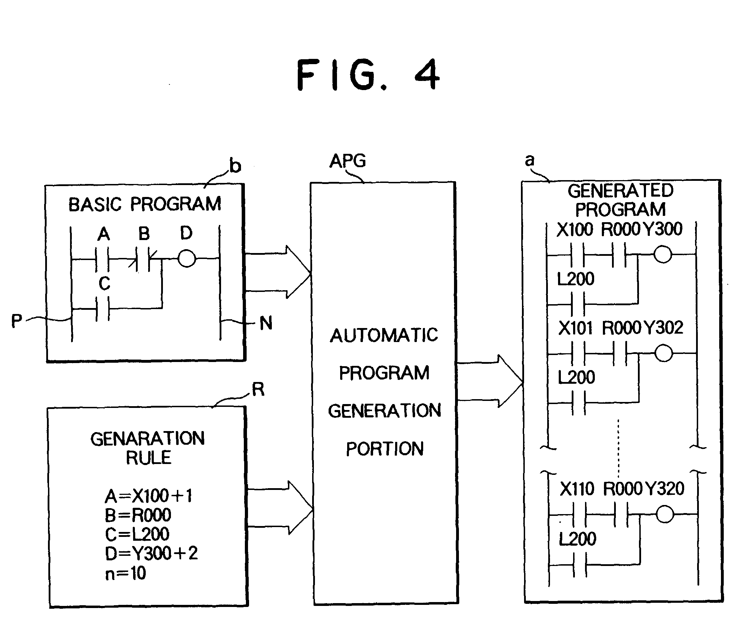

Fig. 4 is a block diagram of means having a function of automatically generating a similar ladder circuit in the above-mentioned programming system. In Fig. 4, reference symbol APG denotes an automatic program generation portion. In actual, the automatic program generation portion APG is stored in the system memory s of the programming system 50 in the form of a program. The function of the automatic program generation portion APG will now be explained. First, a basic ladder circuit, to which a reference is to be made in automatic program generation, is extracted from the program memory a of the programming system 50. The extracted ladder circuit is copied or stored into the temporary storage memory b. Thereafter, a program transformation/processing is performed for the ladder circuit stored in the temporary storage memory b in accordance with an automatic program generation rule designated by the user, thereby generating a similar ladder circuit. Reference symbol R denotes an automatic program generation rule inputted by the user from the keyboard 55 and n represents the number of ladder circuits to be automatically generated. In the shown example, the number is "10" or it is required that a ladder circuit stored in the temporary storage memory b should be generated by ten in number. Symbols A, B, C and D respectively designate the corresponding a contact A, b contact B, a contact C and output coil D of a ladder circuit stored in the temporary storage memory b. The ladder circuit stored in the temporary storage memory b is a ladder circuit in which a series circuit including the a contact A, the b contact B and the output coil D is connected between ladder buses P and N and the a contact C is connected in parallel with a series circuit portion including the a contact A and the b contact B. "A = X100 + 1" shows that in automatic generation of ten ladder circuits, a contact corresponding to the a contact A should be numbered with a sequential increase from "X100" one by one as "X101", "X102", "X103", ---. "B = R000" shows a contact number to be commonly provided to the ten ladder circuits to be automatically generated. "C = L000" too shows a contact number to be commonly provided to the ten ladder circuits to be automatically generated. "D = Y300 + 2" shows that in automatic generation of ten ladder circuits, an output coil corresponding to the output coil D should be numbered with a sequential increase from "Y300" two by two as "Y302", "Y304", "Y306", ---. The automatic program generation portion APG supplied with such data inputted by the user concerning the generation rule automatically generates ten ladder circuits in the program memory a on the basis of a ladder circuit stored in the temporary storage memory b and adds these ladder circuits into a sequence program having already been stored in the program memory a, thereby automatically generating a sequence program. In case that there are a plurality of basic ladder circuits which provide the bases of copy, the above processing is repeatedly performed for the basic ladder circuit stored in the temporary storage memory b. Accordingly, a ladder circuit stored in the temporary memory b at this time or after automatic generation is always a circuit added to the program memory b at the latest.

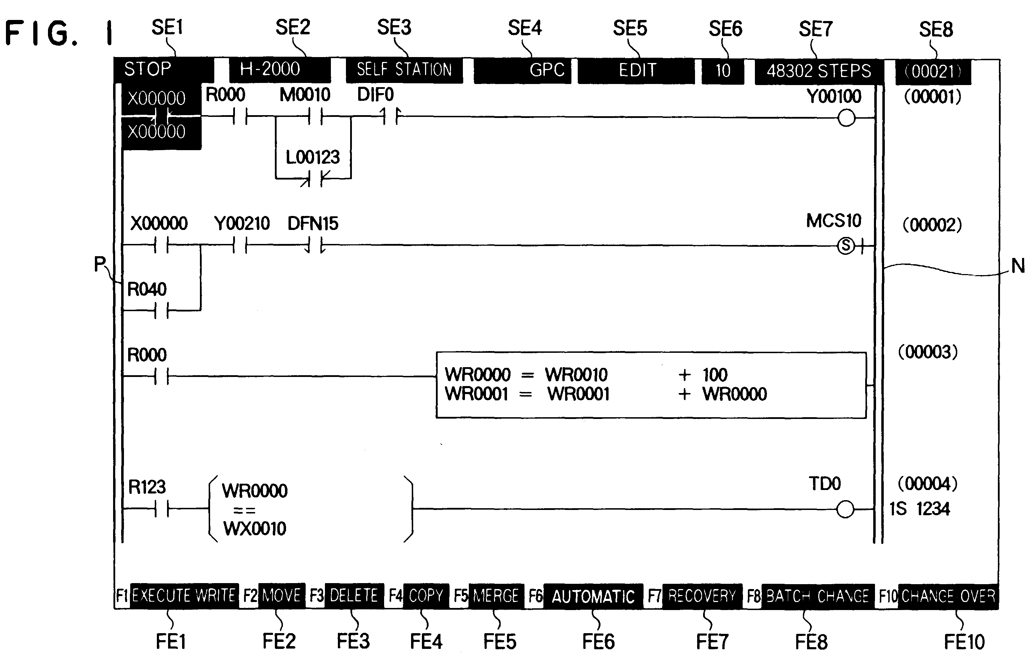

Fig. 1 is a diagram showing an example of the state of display on a display screen of the display device 54 of the programming system 50. More particularly, Fig. 1 shows a state of the display screen in a mode for program edition. In the figure, the uppermost column includes state display areas for indicating the present state of the programming system 50. An area SE1 is provided for indicating whether or not a programmable controller 60 to which the programming system 50 is connected is actually operating. On the area SE1 are displayed "RUN" if the programmable controller is operating and "STOP" if the programmable controller is not operating. In the shown example, "STOP" is displayed or it is indicated that the programmable controller 60 is being stopped. An area SE2 is provided for indicating a type name of the programmable controller 60 to which the programming system 50 is connected. The present example shows that the type name of the programmable controller 60 is "H-2000". An area SE3 is provided for indicating a programmable controller 60 to which the programming system 50 is logically connected. In the case of the present embodiment, a plurality of programmable controller 60 can be interconnected by a communication line so that the connection of the programming system 50 to any one of the interconnected programmable controllers 60 allows a logical connection to the other programmable controller 60. In case that the programming system 50 is logically connected to a programmable controller 60 to which the programming system is directly connected in a hardware fashion, "SELF STATION" is displayed on the area SE3. In case that the programming system 50 is logically connected to the other programmable controller 60, "OTHER STATION" is displayed on the area SE3. An area SE4 is provided for indicating which contents of those of the program memory a (i.e. the contents stored in the program memory a provided in the programming system 50) and those of the program memory 61 (i.e. the contents stored in the program memory 61 provided in the program controller 60) are represented in the form of a ladder circuit diagram by the programming system 50. In case that the contents of the program memory a are represented, "GPC" is displayed. In case that the contents of the program memory 61 are represented, "CPU" is displayed. An area SE5 is provided for indicating a mode of the programming system 50. Either an "EDIT" mode, a "READ" mode or a "MONITOR" mode is displayed on the area SE5. The "EDIT" mode is a mode in which the input or edition of a program is actually possible. The "READ" mode is a mode in which a sequence program is read from the program memory a or 61 and the read sequence program is merely displayed in the form of a ladder circuit diagram on the display screen. The "MONITOR" mode is a mode in which the monitoring of the state of operation of each of the contacts and the output coil upon operation of the programmable controller 60 is made possible by changing its display pattern in a ladder circuit diagram. An area SE6 is provided for distinguishably representing whether each constant represented in the ladder circuit diagram is a decimal number or a hexadecimal number. In the case of a decimal number, "10" is displayed on the SE6. In the case of a hexadecimal number, "16" is displayed. An area SE7 is provided for indicating the remaining storage capacity of the program memory a or the program memory 61 in units of one step. In general, one contact corresponds to one step. The present example shows that there are 48302 steps left. An area SE8 is provided for indicating the number of ladder circuits presently stored or registered in the program memory a or the program memory 61. The present example shows that 21 circuits are registered. A right side portion of the display screen is an area for displaying a circuit number of a ladder circuit. More particularly, (00001), (00002), (00003) and (00004) represent the circuit numbers of ladder circuits displayed on the left side thereof and this circuit number is designated in an individual processing to settle or designate a ladder circuit positioned or displayed on the left side of the circuit number.

In Fig. 1, the lowermost column on the display screen includes function display areas for indicating the functions of function keys (not shown) arranged on the keyboard 55. An area FE1 is provided for indicating a function "EXECUTE WRITE" established for a function key F1. When a user depresses the key F1 after the completion of edition, the contents of edition till that time are written into the program memory a or the program memory 61. An area FE2 is provided for indicating a function "MOVE" established for a function key F2. With the function "MOVE", one or more ladder circuits inputted are moved singly or in a set of consecutive circuits to a position between other ladder circuits. When the user depresses the key F2, a message for input of a range of circuits to be moved is displayed. Then, the user inputs a leading circuit number and a final circuit number in accordance with this message to define or designate the range of circuits to be moved. Subsequently, a message for input of a circuit number of the destination for movement is displayed. When the user inputs this circuit number, the range-designated circuits are moved before the circuit number of the destination for movement. An area FE3 is provided for indicating a function "DELETE" established for a function key F3. With the function "DELETE", one or more ladder circuits inputted are deleted singly or in a set of consecutive circuits. When the user depresses the key F3, a message for input of a range of circuits to be deleted is displayed. Then, the user inputs a leading circuit number and a final circuit number in accordance with this message to designate the range of circuits to be deleted. Thus, the circuits in the designated range are deleted. An area FE4 is provided for indicating a function "COPY" established for a function key F4. With the function "COPY", one or more ladder circuits inputted are copied singly or in a set of consecutive circuits to a position between other ladder circuits. When the user depresses the key F4, a message for the input of a range of circuits to be copied is displayed. Then, the user inputs a leading circuit number and a final circuit number in accordance with this message to designate the range of circuits to be copied. Subsequently, a message for input of a circuit number of the destination for copy is displayed. When the user inputs this circuit number, the range-designated circuits are copied before the circuit number of the destination for copy. An area FE5 is provided for indicating a function "MERGE" established for a function key F5. With the function "MERGE", for example, one or more ladder circuits are merged in any range and singly or in a set of consecutive circuits from an already produced sequence program stored in the external memory 52 to a position between ladder circuits which are being generated. When the user depresses the key F5, a message for input of a range of circuits to be copied is displayed. Then, the user inputs a leading circuit number and a final circuit number in accordance with this message to designate the range of circuits to be merged. Subsequently, a message for input of a circuit number of the destination for mergence is displayed. When the user inputs this circuit number, the range-designated circuits are read from the external memory 52 and are merged before the circuit number of the destination for mergence. An area FE6 is provided for indicating a function "AUTOMATIC GENERATION" established for a function key F6. With the function "AUTOMATIC GENERATION", one or more ladder circuits, which provide the bases of automatic generation, are selected singly or in a set of consecutive circuits and are stored in the temporary storage memory b, as has already been mentioned. When the user depresses the key F6, there is displayed a message for input of a range of circuits which provide the bases of automatic generation. Then, the user inputs a leading circuit number and a final circuit number in accordance with this message to designate the range of circuits which provide the bases of automatic generation. The range-designated circuits are stored into the temporary storage memory b. Subsequently, a generation rule is inputted, as mentioned above. Ladder circuits are automatically generated on the basis of the inputted generation rule, as mentioned above. An area EF7 is provided for indicating a function "RECOVERY" established for a function key F7. With the function "RECOVERY", an erroneous input, if any, is cancelled. The preceding operation can be cancelled by depressing the key F7. An area EF8 is provided for indicating a function "BATCH CHANGE" established for a function key F8. With the function "BATCH CHANGE", numbers such as contact numbers or output coil numbers of ladder circuits are changed en bloc. An area EF10 is provided for indicating a function "CHANGE-OVER" established for a function key F10. With the function "CHANGE-OVER", the functions of function keys arranged on the keyboard 55 are changed over. In the present embodiment, if the function key F10 is depressed in a state shown in Fig. 1, various coil symbols, output coil symbols and so on for input of ladder circuits are allotted for the function keys so that it it becomes possible to input various symbols by use of the function keys.

Fig. 1 represents a part of a sequence program or a ladder diagram of the program memory a displayed on the display screen of the CRT 54. The generation/edition of a sequence program is made on this display screen. By scrolling ladder circuits on the display screen upward and downward by use of a SCROLL key provided on the keyboard 55, it is possible to fetch all of ladder circuits stored in the program memory a and to display them on the display screen. At this time, in order to make it possible to easily confirm which ladder circuit is stored in the temporary storage memory b, the corresponding ladder circuit stored in the temporary storage memory b is displayed on the display screen in a representation distinguished from other ladder circuits by displaying the corresponding ladder circuit in an emphasized representation in such a manner that the ladder buses P and N of the corresponding ladder circuit are made thick and have a high or enhanced brightness. The example of Fig. 1 shows that all of ladder circuits displayed on the display screen are stored in the temporary storage memory b.

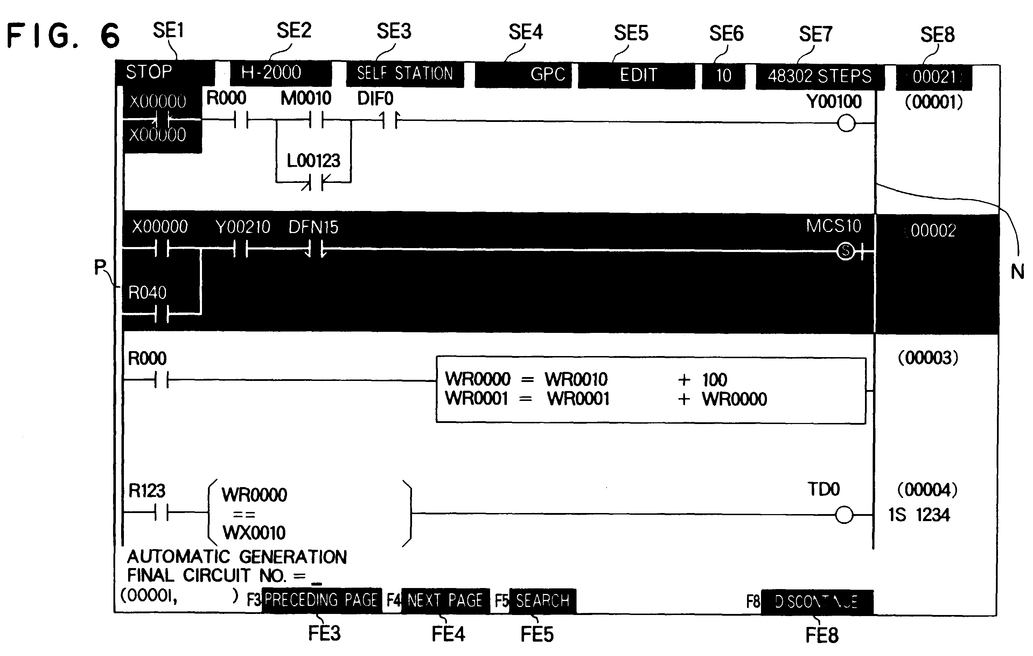

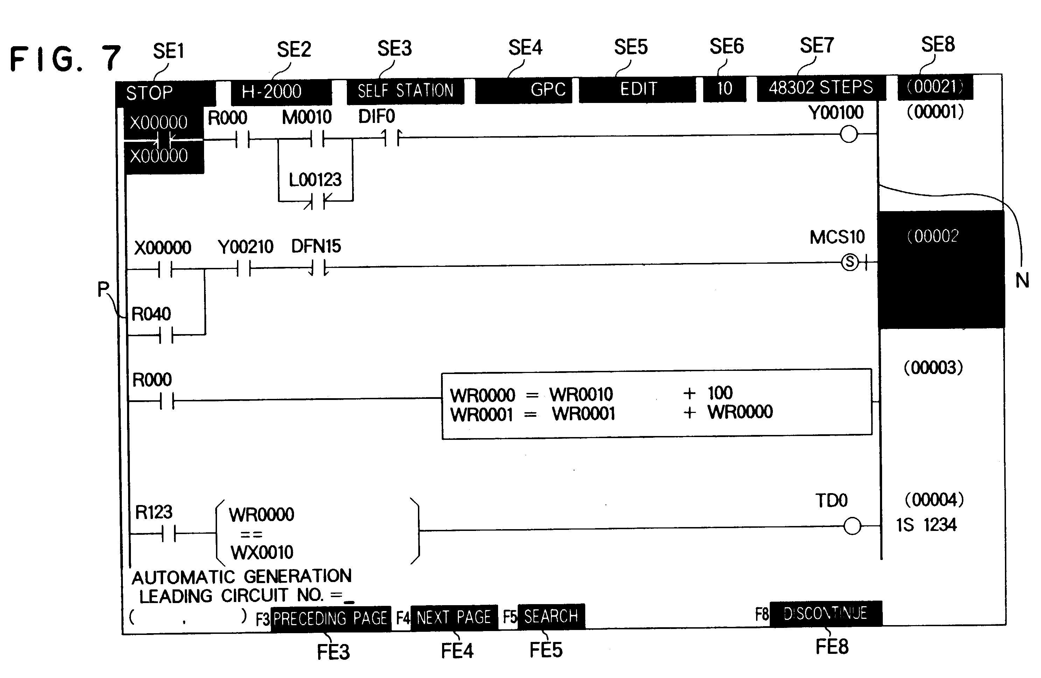

Thus, the ladder circuits stored in the temporary memory b are displayed in an emphasized or distinguished representation on the display screen. By merely performing a scrolling with no special operation, a user can easily confirm which ladder circuit is stored (or registered) in the temporary storage memory b. Therefore, the operability is improved and a programming can be made with a high efficiency. As one alternative to the emphasized display of ladder circuits stored in the temporary storage memory b or another example of the distinguished representation, the whole of the corresponding ladder circuit may be displayed in an inverted representation or in a color-changed representation, as shown in Fig. 6. As another alternative, a circuit number of the corresponding ladder circuit may be displayed in an emphasized representation, as shown in Fig. 7. In both the cases shown in Figs. 6 and 7, it is indicated that a circuit number (00002) is stored in the temporary storage memory b.

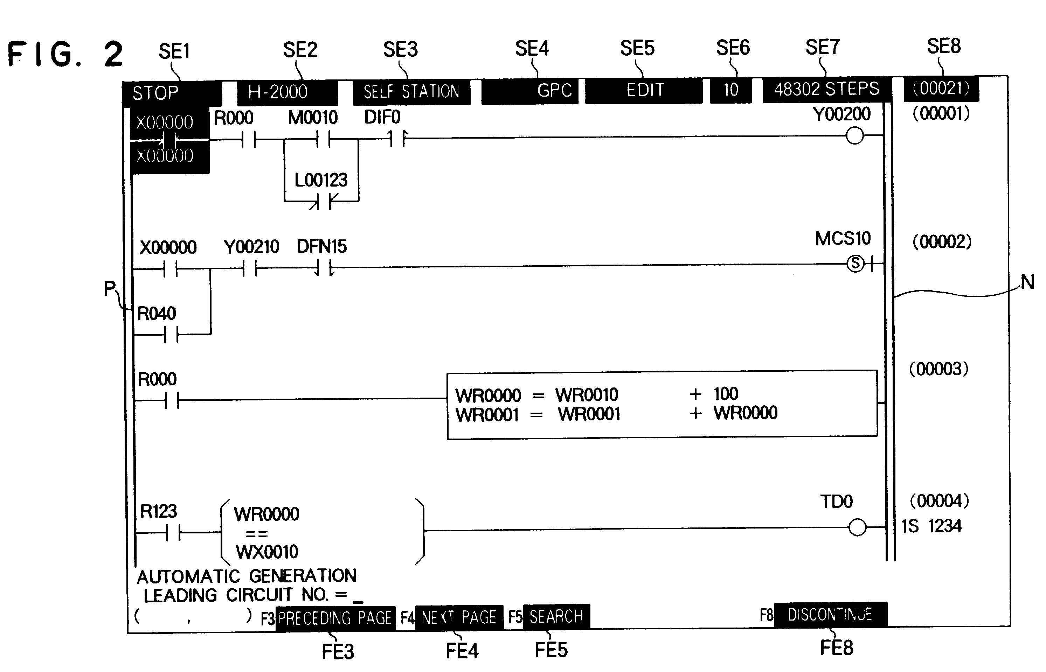

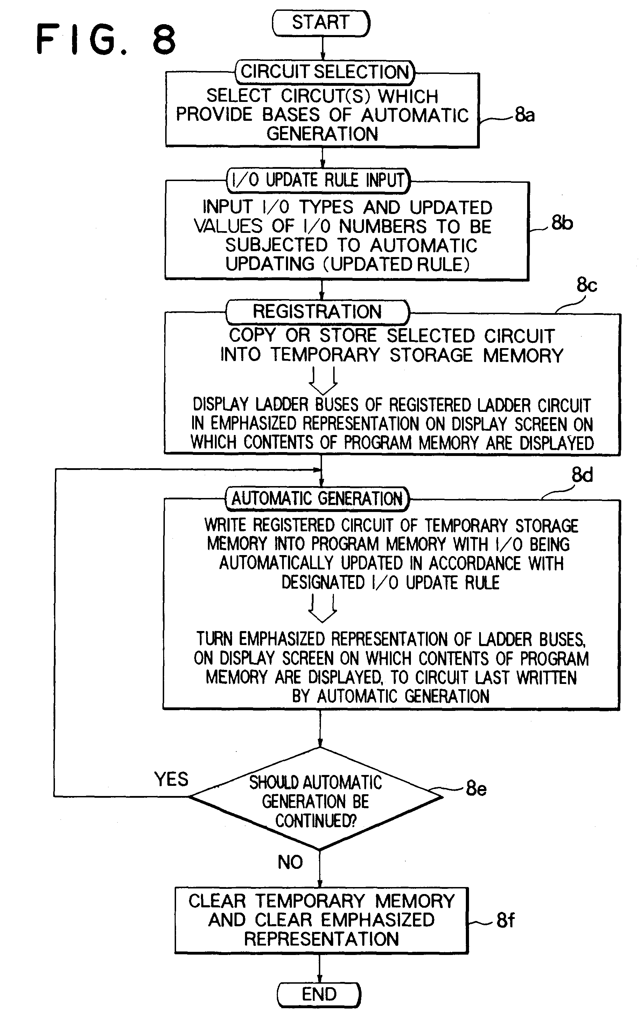

Fig. 8 is a flow chart showing the operation of an automatic program generation processing for attaining the above-mentioned function. This processing means is activated by depressing the function key F6 in the "EDIT" mode shown in Fig. 1. First or in step 8a, ladder circuits providing the bases of automatic generation are selected in units of one circuit. The selection can be made either in units of one circuit or in units of plural circuits. Namely, if the function key F6 is depressed in a state of the display screen in the "EDIT" mode as shown in Fig. 1 to select the "AUTOMATIC GENERATION" function, the display screen takes a state as shown in Fig. 2. Fig. 2 is shown omitting the emphasized representation on the display screen shown in Fig. 1. As shown in a lower portion of Fig. 2, an "AUTOMATIC GENERATION LEADING CIRCUIT No. = " input request message for input of a range of ladder circuits, which provide the bases of automatic generation, is displayed on the display screen. At the same time, the functions of "PRECEDING PAGE", "NEXT PAGE", "SEARCH" and "DISCONTINUE" are assigned to the function keys F3, F4, F5 and F8 and the corresponding function names are displayed on the areas FE3, FE4, FE5 and FE8. The function "PRECEDING PAGE" assigned to the function key F3 is a function of changing over the display screen to display ladder circuits which are arranged in front of ladder circuits being presently displayed. The function "NEXT PAGE" assigned to the function key F4 is a function of changing over the display screen to display ladder circuits which are arranged in rear of the ladder circuits being presently displayed. The function "SEARCH" assigned to the function key F5 is a function of searching for a corresponding ladder circuit by the input of a circuit number of the ladder circuit and displaying the ladder circuit on the display screen. The function "DISCONTINUE" assigned to the function key F8 is a function of forcibly discontinuing or stopping the preceding operation in the case where an erroneous input or the like is made. If a leading circuit number in the range of ladder circuits providing the bases of automatic generation is inputted on the display screen shown in Fig. 2 and an "EXECUTE" key provided on the keyboard 55 is thereafter depressed, the display screen takes a state as shown in Fig. 6 though the form of a distinguished representation is different since Fig. 6 shows the alternative to the emphasized representation shown in Fig. 1 but omitted from Fig. 2. On the display screen shown in Fig. 2, an "AUTOMATIC GENERATION FINAL CIRCUIT No. = " input request message for input of the last in the range of ladder circuits providing the bases of automatic generation is displayed, as shown in a lower portion of Fig. 2. If the final circuit number in the automatic generation range is inputted on the display screen shown in Fig. 2 and the "EXECUTE" key is thereafter depressed, the ladder circuits providing the bases of automatic generation are settled. If the "EXECUTE" key is depressed without inputting the circuit number in the state of the display screen shown in Fig. 6, only one ladder circuit inputted on the display screen shown in Fig. 2 is selected and settled.

Next or in step 8b, an input/output update rule is inputted. More particularly, input/output types and updated values of input/output numbers to be subjected to automatic updating, and so on are inputted from the keyboard 55, as shown in Fig. 4. In step 8c, the selected circuit is read from the program memory a and is copied or stored into the temporary storage memory b. Subsequently, the ladder buses P and N of the registered ladder circuit is displayed in a distinguished representation (as shown in Fig. 1, 6 or 7) on the display screen on which the contents of the program memory a are displayed in a ladder diagram. Next or in step 8d for a processing of automatic generation of ladder circuits, a program transformation/processing is performed for the ladder circuit stored in the temporary storage memory b in step 8c in accordance with the user's designated automatic program generation rule inputted in step 8b, as explained in conjunction with Fig. 4, thereby generating similar ladder circuits. Thus, the generated ladder circuits are added to a sequence program having already been stored in the program memory a. In the present embodiment, the ladder circuit stored in the temporary storage memory b after automatic generation is the same as the last generated ladder circuit, that is, a ladder circuit last added to the program memory a, as has already been mentioned. Therefore, in step 8d, the ladder circuit last written into the program memory a by the automatic generation is displayed in a distinguished representation. Subsequently or in step 8e, whether or not the automatic generation should be continued is inquired of the user. If there is an instruction of continuation, the flow turns to step 8d to continue the automatic generation processing. If the automatic generation should be completed, the contents of the temporary storage memory b are cleared in step 8f. At the same time, the distinguished representation is cleared.

According to the embodiment as mentioned above, since a ladder circuit(s), in that portion of ladder circuits providing the bases of automatic generation which is copied or stored in the temporary storage memory b, can be confirmed at a glance with no need of a special operation during generation/edition of a ladder diagram, the confirmation is facilitated, thereby making it possible to prevent an erroneous input before it happens. Also, since a complicated operation for confirmation is not required, the program generation efficiency can be improved.

Though the embodiment has been explained in conjunction with the case where data concerning a selected ladder circuit forming the basis of automatic program generation is copied or stored from the program memory a into the temporary storage memory b, only a circuit number of the ladder circuit providing the basis of automatic generation may be stored in the temporary storage memory b. For the automatic generation, ladder circuit data as a substance is read from the program memory a on the basis of the circuit number stored in the temporary storage memory b and is then subjected to change/processing. In this case, it becomes possible to reduce a storage capacity required for the temporary storage memory b even in the case where a large number of ladder circuits are selected.

As apparent from the foregoing explanation, according to the present invention, the presence/absence of storage of a circuit in a temporary storage memory is always displayed on a display screen for edition of a ladder diagram. Therefore, in case that it is desired to perform a function such as automatic program generation using the temporary storage memory, it is possible to advance a work while confirming, which circuit is stored in the temporary storage memory, without making a change-over for a display screen. Accordingly, it is possible to prevent an erroneous operation, an erroneous input or an erroneous erasion of contents stored. Also, the efficiency of a programming operation is improved.

## Claims

1. A displaying method for a programming system to generate/edit a sequence program to be written into a memory (61) of a programmable controller (60), said programming system (50) comprising
a program memory (a) for storing the sequence program including a multiplicity of ladder circuits,
a temporary memory (b) for storing at least one ladder circuit which provides a base for generating/editing the sequence program, and
a display means (54) for displaying on its display screen the sequence program in a form of a ladder diagram to enable a user to interactively generate/edit the sequence program to be stored into the memory (61) of the programmable controller (60),
said display method comprising the steps of:
extracting an arbitrary ladder circuit included in the sequence program stored in said program memory (a),
storing said selected arbitrary ladder circuit into said temporary memory (b), said arbitrary ladder circuit providing the base for generating/editing the sequence program, and
displaying the sequence program stored in said program memory (a) on the display means (54) so that said selected arbitrary ladder circuit is displayed distinguished from the other ladder circuits of the sequence program by emphasising at least a part of said selected arbitrary ladder circuit visually.

2. The displaying method according to claim 1, wherein the selected arbitrary ladder circuit is displayed in a color-changed representation.

3. The displaying method according to claim 1, wherein the selected arbitrary ladder circuit is displayed in a brightness-inverted representation.

4. The displaying method according to claim 1, wherein the selected arbitrary ladder circuit is displayed in a thick form with a high or an enhanced brightness.

5. The displaying method according to claim 1, wherein a circuit number of the selected arbitrary ladder circuit is displayed distinguished from circuit numbers of the other ladder circuits.

## Patentansprüche

1. Anzeigeverfahren für ein Programmiersystem zum Erzeugen/Editieren eines in einen Speicher (61) einer programmierbaren Steuerung (60) einzuschreibenden Ablaufprogramms, wobei das Programmiersystem (50)
einen Programmspeicher (a) zum Speichern das eine Vielzahl von Kettenschaltungen enthaltenen Ablaufprogramms,
einen temporären Speicher (b) zum Speichern wenigstens eine Kettenschaltung, die als Grundlage zum Erzeugen/Editieren des Ablaufprogramms dient, und
eine Anzeigeeinrichtung (54) zum Anzeigen des Ablaufprogramms in Form eines Kettendiagramms auf dem Bildschirm, um einen Benutzer ein interaktives Erzeugen/Editieren des im Speicher (61) der programmierbaren Steuerung (60) zu speichernden Ablaufprogramms zu ermöglichen,
wobei das Anzeigeverfahren die Schritte
Herausnehmen einer Arbeits-Kettenschaltung, die in dem im Programmspeicher (a) gespeicherten Ablaufprogramm enthalten ist,
Speichern der ausgewählten Arbeits-Kettenschaltung im temporären Speicher (b), wobei die Arbeits-Kettenschaltung als Grundlage zum Erzeugen/Editieren des Ablaufprogramms dient, und
Darstellen des im Programmspeicher (a) gespeicherten Ablaufprogramms auf der Anzeigeeinrichtung (54) so, daß die ausgewählte Arbeits-Kettenschaltung von den anderen Kettenschaltungen des Ablaufprogramms durch visuelles Hervorheben wenigstens eines Teiles des ausgewählten Arbeits-Kettenschaltung abgesetzt dargestellt wird.

2. Anzeigeverfahren gemäß Anspruch 1, wobei die ausgewählte Arbeits-Kettenschaltung in einer farblich geänderten Darstellung gezeigt wird.

3. Anzeigeverfahren gemäß Anspruch 1, wobei die ausgewählte Arbeits-Kettenschaltung in einer Umkehr-Helldunkel-Darstellung gezeigt wird.

4. Anzeigeverfahren gemäß Anspruch 1, wobei die ausgewählte Arbeits-Kettenschaltung in einer dicken Auslegung mit einer großen oder verstärkten Helligkeit gezeigt wird.

5. Anzeigeverfahren gemäß Anspruch 1, wobei die Schaltungsnummer der ausgewählten Arbeits-Kettenschaltung von den Schaltungsnummern der anderen Kettenschaltungen abgesetzt dargestellt wird.

## Revendications

1. Procédé d'affichage destiné à un système de programmation pour produire/éditer un programme de séquence à écrire dans une mémoire (61) d'une unité de commande programmable (60), ledit système de programmation (50) comportant
une mémoire de programme (a) destinée à mémoriser le programme de séquence incluant une multiplicité de circuits en échelle,
une mémoire temporaire (b) destinée à mémoriser au moins un circuit en échelle qui constitue une base pour produire/éditer le programme de séquence, et
des moyens d'affichage (54) pour afficher sur leur écran d'affichage le programme de séquence sous la forme d'un diagramme en échelle afin de permettre à un utilisateur de produire/éditer de manière interactive le programme de séquence à mémoriser dans la mémoire (61) de l'unité de commande programmable (60),
ledit procédé d'affichage comportant les étapes consistant à :
extraire un circuit en échelle arbitraire, inclus dans le programme de séquence mémorisé dans ladite mémoire de programme (a),
mémoriser ledit circuit en échelle arbitraire sélectionné dans ladite mémoire temporaire (b), ledit circuit en échelle arbitraire constituant la base pour produire/éditer le programme de séquence, et
afficher le programme de séquence mémorisé dans ladite mémoire de programme (a) sur les moyens d'affichage (54) de sorte que ledit circuit en échelle arbitraire sélectionné soit affiché distinctement des autres circuits en échelle du programme de séquence en mettant visuellement en relief au moins une partie dudit circuit en échelle arbitraire sélectionné.

2. Procédé d'affichage selon la revendication 1, dans lequel le circuit en échelle arbitraire sélectionné est affiché en utilisant une représentation de couleur différente.

3. Procédé d'affichage selon la revendication 1, dans lequel le circuit en échelle arbitraire sélectionné est affiché en utilisant une représentation de luminosité inversée.

4. Procédé d'affichage selon la revendication 1, dans lequel le circuit en échelle arbitraire sélectionné est affiché sous une forme épaissie, avec une forte luminosité ou avec une luminosité renforcée.

5. Procédé d'affichage selon la revendication 1, dans lequel un numéro de circuit du circuit en échelle arbitraire sélectionné est affiché distinctement des numéros de circuit des autres circuits en échelle.
